# EUROPÄISCHE PATENTSCHRIFT

(11) **EP 1 711 379 B1**
(45) Veröffentlichungstag und Bekanntmachung des Hinweises auf die Patenterteilung: **11.07.2007**
(21) Anmeldenummer: 04790052.7
(22) Anmeldetag: 27.10.2004
(51) Int. Cl.: B60R 21/01, B60R 21/34

(54) **ENTRIEGELUNGSVORRICHTUNG FÜR EINE BEWEGLICH GELAGERTE MOTORHAUBE**
UNLOCKING DEVICE FOR A DISPLACEABLY MOUNTED ENGINE BONNET
DISPOSITIF DE DEVERROUILLAGE POUR UN CAPOT MOTEUR MONTE MOBILE

(30) Priorität: 04.02.2004 DE 102004005329
(43) Veröffentlichungstag der Anmeldung: 18.10.2006
(73) Patentinhaber: Conti Temic microelectronic GmbH, 90411 Nürnberg (DE)
(72) Erfinder: BEUSCHEL, Michael, 85134 Stammham (DE); GÖRNIG, Thomas, 85229 Markt Inderdsdorf (DE); BURGMEIER, Raimund, 85049 Ingolstadt (DE); STEINER, Werner, 86529 Schrobenhausen (DE)
(86) Internationale Anmeldenummer: PCT/DE2004/002394
(87) Internationale Veröffentlichungsnummer: WO 2005/075255

(56) Entgegenhaltungen:
- DE-A1- 10 125 812
- DE-A1- 10 200 102
- US-A- 3 871 472
- US-A- 5 549 325
- US-A1- 2002 017 409

## Beschreibung

Die Erfindung betrifft eine Entriegelungsvorrichtung für eine beweglich gelagerte Motorhaube eines Kraftfahrzeugs mit einer zentralen Steuereinheit und mit einer damit verbundenen Auslösevorrichtung, die ein steuerbares Entriegelungselement aufweist, sowie mit einer Energieversorgungseinrichtung.

Um die Gefährdung von Fußgängern im Straßenverkehr zu verringern, werden Kraftfahrzeuge in einem immer größer werdenden Umfang mit passiven und aktiven Schutzvorrichtungen ausgestattet. So wird beispielsweise durch die Vermeidung von scharfen Kanten sowie vorspringenden Fahrzeugteilen versucht, das Risiko schwerer Verletzungen für den Fußgänger bei einem Zusammenstoß mit einem Kraftfahrzeug zu verringern. Neben derartigen passiven Maßnahmen sind auch aktive Schutzvorrichtungen bekannt, die im Falle einer Kollision mit einem Fußgänger aktiviert werden können und zu einer zusätzlichen Schutzwirkung für den Fußgänger führen. Beispielsweise ist vorgesehen, dass bei einem Zusammenstoß die Motorhaube des Kraftfahrzeugs angehoben wird, so dass der Aufprall eines Fußgängers auf die Motorhaube abgemildert und dadurch das Risiko schwerer Verletzungen für den Fußgänger erheblich gesenkt werden kann. Eine derartige Entriegelungsvorrichtung ist aus der DE 10125812 A gemäß dem Oberbegriff des Anspruchs 1 bekannt.

Das möglichst schlagartige Anheben der Motorhaube kann auf verschiedene Arten erfolgen. So sind Schutzmechanismen bekannt, die im Falle einer Kollision mehrere Elektromotoren ansteuern, welche die Motorhaube anheben. Üblicherweise sind zum Anheben der Motorhaube jedoch Federsysteme vorgesehen, bei denen die Motorhaube gegen die Federspannung durch Entriegelungselemente in einer abgesenkten Ruheposition gehalten wird. Sobald eine Kollision mittels geeigneter Sensoren detektiert wird, werden die steuerbaren Entriegelungselemente gelöst, wodurch das Federsystem die Motorhaube in eine angehobene Endstellung schnellen lässt.

Es ist aus der Praxis bekannt, eine oder mehrere Auslösevorrichtungen, die ein steuerbares Rückhaltelement aufweisen, mit einer zentralen Steuereinheit zu verbinden, welche mittels geeigneter an die zentrale Steuereinheit angeschlossener Sensoren eine Kollision detektiert und das Anheben der Motorhaube auslöst. Als zentrale Steuereinheit wird hierbei oftmals die Airbag-Elektroniksteuerung verwendet, da diese bereits über die notwendigen angeschlossenen Sensoren und Signal-Auswerteeinrichtungen verfügt und in einfacher Weise mit einer Auslösevorrichtung für ein steuerbares Entriegelungselement verbunden werden kann. Die für die Auslösung oder Ansteuerung des Entriegelungselements notwendige Energie wird dabei über die zentrale Steuereinheit der Auslösevorrichtung, beziehungsweise der Ansteuerung des Entriegelungselements zugeführt.

Für das Auslösen, beziehungsweise das Ansteuern des Entriegelungselements wird kurzzeitig eine sehr hohe Leistung benötigt, unabhängig davon, ob die Ansteuerung des Entriegelungselements beispielsweise durch einen Elektromagneten, pneumatisch oder hydraulisch erfolgt. Diese kurzzeitige hohe Leistungsaufnahme des Entriegelungselements erfordert eine daran angepasste, für hohe Ströme ausgelegte elektrische Verbindungsleitung zwischen der zentralen Steuereinheit und der Auslösevorrichtung, die zudem ausreichend abgeschirmt sein muss, um andere elektrische Komponenten oder Verbindungsleitungen in dem Kraftfahrzeug nicht zu stören. Für die Energieversorgung der Auslösevorrichtung ist demzufolge eine mit großem Aufwand und üblicherweise gesondert verlegte Verbindungsleitung vorgesehen, die zusätzlich zu der oftmals zumindest teilweise über einen zentralen Datenbus erfolgenden Datenverbindungsleitung zur Ansteuerung der Auslösevorrichtung erforderlich ist. Außerdem muss sichergestellt sein, dass die zentrale Steuereinheit die erforderliche Leistung für das Auslösen, beziehungsweise das Ansteuern des Entriegelungselements zu jedem Zeitpunkt zur Verfügung stellen und an die Auslösevorrichtung weiterleiten kann. Nicht selten werden durch diese Anforderungen aufwendige und kostenintensive Anpassungen der zentralen Steuereinheit notwendig.

Aufgabe der Erfindung ist es demzufolge, eine Entriegelungsvorrichtung für eine beweglich gelagerte Motorhaube mit einer zentralen Steuereinheit und mit einer damit verbundenen Auslösevorrichtung so auszugestalten, dass das Entriegelungselement der Auslösevorrichtung im Falle einer Kollision zuverlässig entriegelt wird, wobei der hierfür erforderliche konstruktive Aufwand für die gesamte Entriegelungsvorrichtung, bzw. die einzelnen Komponenten möglichst gering sein soll.

Diese Aufgabe wird erfindungsgemäß dadurch gelöst, dass die Auslösevorrichtung direkt mit der Energieversorgungseinrichtung verbunden ist. Im einfachsten Fall ist die Auslösevorrichtung direkt mit der Batterie des Kraftfahrzeugs verbunden. Das Auslösen des steuerbaren Entriegelungselements erfordert üblicherweise weniger Leistung als das Anlassen des Kraftfahrzeugs, so dass bei ordnungsgemäßem Zustand der Batterie eine für die Auslösevorrichtung ausreichende Leistung ohne Weiteres bereitgestellt ist. Da die Batterie oftmals an einer einfach zugänglichen Stelle im Motorraum angeordnet ist, kann die unmittelbar unterhalb der Motorhaube im Motorraum angeordnete Auslösevorrichtung mit einer für einen ausreichend großen Stromfluss dimensionierten elektrischen Verbindungsleitung ohne großen Aufwand mit der Batterie verbunden werden.

Die zentrale Steuereinheit muss lediglich über eine Datenleitung mit der Auslösevorrichtung verbunden sein, um die für eine Ansteuerung des Entriegelungselements notwendigen Steuersignale übermitteln zu können. Da nur Steuersignale beispielsweise in Form von binären Dateninformationen übertragen werden müssen, ist keine besondere Abschirmung wie bei den Energieversorgungsleitungen notwendig. So ist beispielsweise auch eine strommodulierte Übertragung der Steuersignale denkbar. Gegebenenfalls kann zumindest teilweise eine zentrale Datenbusleitung verwendet werden, welche verschiedene elektronische Komponenten miteinander verbindet.

Da die zentrale Steuereinheit nicht mehr für die Energieversorgung der Auslösevorrichtung, sondern nur noch für deren Ansteuerung zuständig ist und verwendet wird, sind die konstruktiven Anforderungen an die zentrale Steuereinheit und damit deren Herstellungskosten wesentlich geringer verglichen mit einer auch für die Energieversorgung der Auslösevorrichtung zuständigen zentralen Steuereinheit. Durch die direkte Verbindung der Energieversorgungseinrichtung mit der Auslösevorrichtung ist die Entriegelungsvorrichtung auch weniger anfällig gegenüber Störungen oder Fehlfunktionen der zentralen Steuereinheit, die gegebenenfalls durch entsprechende Kontrollmechanismen in der Auslösevorrichtung erkannt und unterdrückt werden können.

Besonders vorteilhaft ist vorgesehen, dass die Auslösevorrichtung eine Energiespeichereinrichtung aufweist. Die Energiespeichereinrichtung besteht beispielsweise aus mehreren Blockkondensatoren, welche von der Fahrzeugbatterie aufgeladen und gespeist werden. Die für eine Auslösung und Entriegelung notwendige Energie kann ohne merkliche Zeitverzögerung vollständig aus der Energiespeichereinrichtung abgerufen werden. Da die Aufladung der Blockkondensatoren nicht ähnlich kurzfristig erfolgen muss, müssen lediglich die Verbindungsleitungen der Energiespeichereinrichtung zu dem Entriegelungselement, nicht aber die Zuleitungen von der Batterie zu den Blockkondensatoren für einen großen Stromfluss ausgelegt sein.

Vorzugsweise ist vorgesehen, dass die Auslösevorrichtung eine Auslöseelektronikeinheit zur Steuerung des Rückhaltelements aufweist, welche über eine Datenleitung mit der zentralen Steuereinheit verbunden ist. In der Auslöseelektronikeinheit können die Steuersignale der zentralen Steuereinheit ausgewertet und gegebenenfalls dezentral verarbeitet werden, bevor das Entriegelungselement entriegelt wird. Durch die Auslöseelektronikeinheit kann gleichzeitig eine Überwachung und Steuerung der mit der Auslösevorrichtung direkt verbundenen Energieversorgungseinrichtung vorgenommen werden.

Einer Ausgestaltung des Erfindungsgedankens zufolge ist vorgesehen, dass die Auslösevorrichtung einen oder mehrere Sensoren zur Überwachung des Zustands des Entriegelungselements aufweist. In Verbindung mit einer Auswerteeinheit zur Auswertung des Zustands des Entriegelungselements und der Steuerinformationen der zentralen Steuereinheit kann eine kontrollierte Auslösung des Entriegelungselements erfolgen. Stellt der Sensor zur Überwachung des Zustands des Entriegelungselements fest, dass das Rückhaltelement bereits entriegelt wurde, obwohl weiterhin Steuersignale zum Entriegeln des Entriegelungselements von der zentralen Steuereinheit an die Auslösevorrichtung gesendet werden, so kann beispielsweise die elektrisch leitende Verbindung zur Batterie des Kraftfahrzeugs unterbrochen werden. Ist der Unfall bereits geschehen und wurde die Motorhaube bereits angehoben, so ist eine andauernde elektrisch leitende Verbindung der Batterie mit einer auf Grund des Zusammenpralls vielleicht beschädigten Auslösevorrichtung nicht nur unnötig, sondern stellt schlimmstenfalls eine zusätzliche Gefährdung der Unfallbeteiligten beispielsweise durch die Kabelbrandgefahr dar.

Gemäß einer vorteilhaften Ausgestaltung des Erfindungsgedankens ist vorgesehen, dass die Auslösevorrichtung eine Schnittstelle zur Kommunikation mit der zentralen Steuereinheit aufweist. Über diese Schnittstelle können nicht nur Steuersignale zur Ansteuerung des Entriegelungselements empfangen werden, sondern auch Informationen beispielsweise über den Zustand des Entriegelungselements oder der Energieversorgungseinrichtung an die zentrale Steuereinheit übertragen werden, so dass dort eine zentrale Auswertung ermöglicht wird. Durch die Möglichkeit eines bidirektionalen Datenaustauschs zwischen der zentralen Steuereinheit und der Auslösevorrichtung können sowohl in der zentralen Steuereinheit als auch in der Auslösevorrichtung Kontrollmechanismen vorgesehen sein, welche die vorliegenden Informationen auswerten und eine fehlerhafte Ansteuerung des Entriegelungselements vermeiden können.

Weitere Ausgestaltungen des Erfindungsgedankens sind Gegenstand weiterer Unteransprüche.

Nachfolgend wird ein Ausführungsbeispiel der Erfindung näher erläutert, welches in der Zeichnung dargestellt ist.

Es zeigt:
Fig. 1 eine schematisierte Übersicht über die einzelnen Komponenten der Entriegelungsvorrichtung und
Fig. 2 eine schematisierte Darstellung einer Auslösevorrichtung, die ein steuerbares Entriegelungselement aufweist und direkt mit einer nicht dargestellten Energieversorgungseinrichtung verbunden ist.

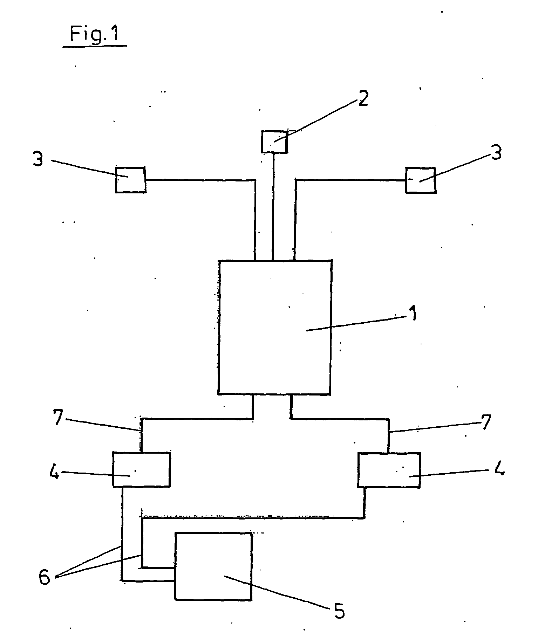

Die in der Fig. 1 in einer stark vereinfachenden Darstellung gezeigte Entriegelungsvorrichtung für eine beweglich gelagerte Motorhaube eines Kraftfahrzeugs weist eine zentrale Steuereinheit 1 auf, die mit verschiedenen Sensoren 2, 3 verbunden ist. Die zentrale Steuereinheit 1 kann beispielsweise die zentrale Airbag-Steuereinrichtung sein. Als Sensoren können beispielsweise im Bereich der Stoßstange angeordnete Druck-, Kraft- oder Verformungssensoren 2 oder aber im Fahrzeug angeordnete Beschleunigungs- beziehungsweise Verzögerungssensoren 3 verwendet werden. Auch der Einsatz von Pre-Crash-Sensoren ist denkbar. Derartige Sensoren sind oftmals zusammen und in Verbindung mit einer Airbag-Steuereinrichtung bereits in dem Kraftfahrzeug vorhanden und können ohne wesentlichen zusätzlichen Aufwand auch für die Entriegelungsvorrichtung genutzt werden. Über diese Sensoren kann ein drohender oder bereits erfolgter Zusammenprall mit einem Fußgänger erfasst und an die zentrale Steuereinheit 1 übermittelt werden.

Die zentrale Steuereinheit 1 ist über Datenleitungen mit zwei Auslösevorrichtungen 4 verbunden. Je nach Ausgestaltung der Auslösevorrichtungen 4 ist auch die Verwendung von beispielsweise vier oder lediglich einer Auslösevorrichtung möglich. Die beiden Auslösevorrichtungen 4 gemäß des dargestellten Ausführungsbeispiels sind an beiden Seiten der Motorhaube des Kraftfahrzeugs angeordnet und können bei einer Aktivierung der Auslösevorrichtungen 4 die Motorhaube schlagartig anheben. Die beiden Auslösevorrichtungen 4 sind jeweils direkt mit einer Energieversorgungseinrichtung 5, beispielsweise der Batterie des Kraftfahrzeugs verbunden. Die bei einer Aktivierung der Auslösevorrichtungen 4 kurzzeitig erforderliche hohe Leistung wird über daran angepasste, ausreichend dimensionierte und abgeschirmte elektrische Verbindungsleitungen 6 von der Energieversorgungseinrichtung 5 den Auslösevorrichtungen 4 zugeführt.

Mit der zentralen Steuereinheit 1 sind die Auslösevorrichtungen 4 dagegen lediglich über Datenleitungen 7 verbunden, die als diskrete, parallele oder verdrillte Datenleitungen oder als Teil einer Busleitung ausgeführt sein können. Da die zentrale Steuereinheit 1 weder unmittelbar mit der Energieversorgungseinrichtung 5 verbunden ist noch diese direkt ansteuert, sind der konstruktive Aufwand und die Störanfälligkeit der zentralen Steuereinheit 1 gering.

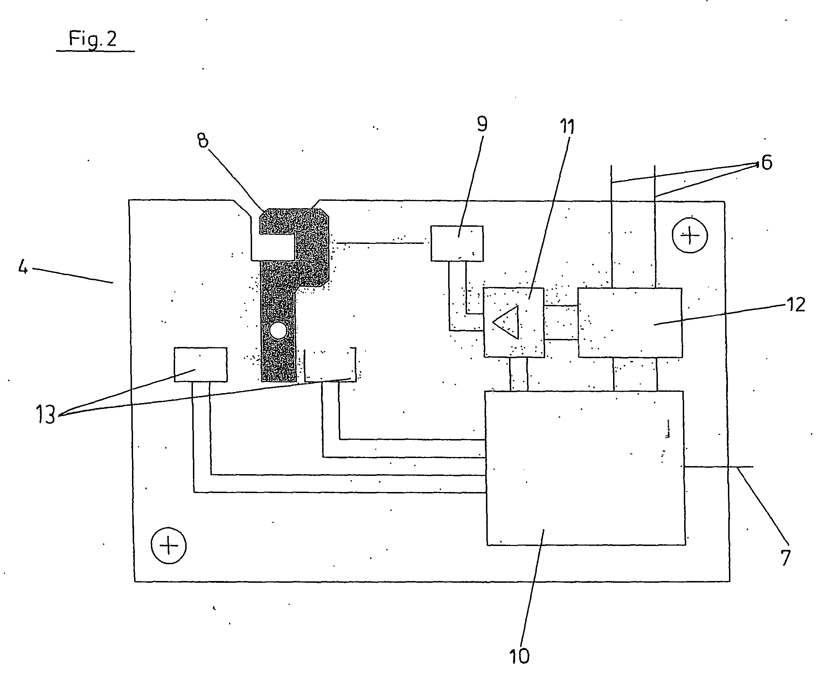

In Fig. 2 ist eine Auslösevorrichtung 4 ebenfalls in stark vereinfachter Darstellung gezeigt. Die Auslösevorrichtung 4 weist als Entriegelungselement eine schwenkbar gelagerte Sperrklinke 8 auf, welche mit der nicht dargestellten Motorhaube in einen lösbaren Eingriff bringbar ist. Durch einen benachbart zur Sperrklinke angeordneten Elektromagneten 9 kann die Sperrklinke 8 verschwenkt, beziehungsweise entriegelt werden und dadurch die gegen die Federkraft vorgespannte Motorhaube freigeben, so dass diese aus einer durch die Sperrklinke 8 zurückgehaltenen Ruhestellung in eine angehobene Endstellung schnellt. Die Entriegelung der Sperrklinke 8 kann abweichend von dem in der Fig. 2 dargestellten Ausführungsbeispiel auch pneumatisch oder hydraulisch erfolgen. Ebenso ist eine motorbetätigte Entriegelung der Motorhaube denkbar.

Die Auslösevorrichtung 4 weist eine Auslöseelektronikeinheit, bzw. Auswerteeinheit 10 auf, welche über eine Datenleitung 7 mit der nicht dargestellten zentralen Steuereinheit 1 verbunden ist. Der Elektromagnet 9 ist über eine Schalteinrichtung 11 sowie eine Energiespeichereinrichtung 12 mit den elektrischen Verbindungsleitungen 6 und darüber mit der nicht dargestellten Energieversorgungseinrichtung 5 verbunden. Die mit den Schalt- und Energiespeichereinrichtungen 11, 12 verbundene Auswerteeinheit 10 kann in Abhängigkeit von den über die Datenleitung 7 empfangenen Steuersignalen über die Schalteinrichtung 11 den Elektromagneten 9 einschalten und dadurch die Sperrklinke 8 in eine entriegelte Position verschwenken. Die für das Einschalten des Elektromagneten 9 und die Auslösung der Sperrklinke 8 erforderliche Energie kann vollständig in der Energiespeichereinrichtung 12 zwischengespeichert und ohne wesentliche Zeitverzögerung daraus abgerufen werden. Die Energiespeirchereinrichtung 12 weist beispielsweise mehrere Blockkondensatoren auf, die von der Energieversorgungseinrichtung 5 aufgeladen werden können.

Mittels geeigneter Sensoren 13, die beispielsweise als Mikroschalter oder Hallsensoren ausgeführt sein können, kann die Lage der Sperrklinke 8 überwacht und der ermittelte Zustand über die Auswerteeinheit 10 und die Datenleitung 7 der zentralen Steuereinheit 1 übermittelt werden.

Ein derartiger Aufbau der Auslösevorrichtung 4 stellt eine sogenannte Mechatronik-Einheit dar, die auch als smart release bezeichnet werden kann. Die Auslösevorrichtung 4 übernimmt dabei in Form einer kompakten und bis auf die Verbindungsleitungen 6, 7 abgeschlossenen Einheit die Funktionen der Energieversorgung und -ansteuerung sowie die Lageüberwachung der Sperrklinke 8, der Systemdiagnose und Auswertung der angeschlossenen Komponenten sowie der Datenkommunikation mit der zentralen Steuereinheit 1.

## Patentansprüche

1. Entriegelungsvorrichtung für eine beweglich gelagerte Motorhaube eines Kraftfahrzeugs mit einer zentralen Steuereinheit und einer damit verbundenen Auslösevorrichtung, die ein steuerbares Entriegelungselement aufweist, sowie mit einer Energieversorgungseinrichtung, wobei
a) die Auslösevorrichtung (4) direkt mit der Energieversorgungseinrichtung (5) verbunden ist,
b) **dadurch gekennzeichnet, dass** die Auslösevorrichtung (4) einen oder mehrere Sensoren (13) zur Überwachung der Lage des Entriegelungselements aufweist.

2. Entriegelungsvorrichtung nach Anspruch 1, **dadurch gekennzeichnet, dass** die Auslösevorrichtung (4) eine Energiespeichereinrichtung (12) aufweist.

3. Entriegelungsvorrichtung nach Anspruch 1 oder 2, **dadurch gekennzeichnet, dass** die Auslösevorrichtung (4) eine Auslöseelektronikeinheit (10) zur Steuerung des Entriegelungselements aufweist, welche über eine Datenleitung (7) mit der zentralen Steuereinheit (1) verbunden ist.

4. Entriegelungsvorrichtung nach einem der voranstehenden Ansprüche, **dadurch gekennzeichnet, dass** die Auslösevorrichtung (4) eine Auswerteeinheit zur Auswertung der Steuerinformation der zentralen Steuereinheit (1) aufweist.

5. Entriegelungsvorrichtung nach einem der voranstehend genannten Ansprüche, **dadurch gekennzeichnet, dass** die Auslösevorrichtung (4) eine Schnittstelle zur Kommunikation mit der zentralen Steuereinheit (1) aufweist.

6. Entriegelungsvorrichtung nach einem der voranstehenden Ansprüche, **dadurch gekennzeichnet, dass** das Entriegelungselement eine beweglich gelagerte Sperrklinke (8) ist, welche mit der Motorhaube in einen lösbaren Eingriff bringbar ist.

7. Entriegelungsvorrichtung nach Anspruch 6, **dadurch gekennzeichnet, dass** die Sperrklinke (8) elektrisch, elektromagnetisch, pneumatisch oder hydraulisch entriegelbar ist.

8. Entriegelungsvorrichtung nach Anspruch 6 oder 7, **dadurch gekennzeichnet, dass** der Sensor (13) zur Überwachung des Zustands des Entriegelungselements die Lage der Sperrklinke (8) überwacht.

9. Entriegelungsvorrichtung nach einem der voranstehenden Ansprüche, **dadurch gekennzeichnet, dass** der Sensor (13) ein Mikroschalter oder Hallsensor ist.

10. Entriegelungsvorrichtung nach einem der voranstehenden Ansprüche, **dadurch gekennzeichnet, dass** die Datenleitung (7), welche die Auslösevorrichtung (4) mit der zentralen Steuereinheit (1) verbindet, als diskrete, parallele oder verdrillte Datenleitung oder als Teil einer Busleitung ausgeführt ist.

## Claims

1. An unlocking device for a displaceably mounted engine bonnet of a motor vehicle, comprising a central control unit and a triggering device which is connected thereto and has a controllable unlocking element, and with a energy storage device, whereby
a) the triggering device (4) is connected directly to the energy storage device (5),
b) **characterised in that** the triggering device (4) has one or more sensors (13) for monitoring the position of the unlocking device.

2. The unlocking element as claimed in Claim 1, **characterised in that** the triggering device (4) has an energy storage device (12).

3. The unlocking element as claimed in Claim 1 or 2, **characterised in that** the triggering device (4) has a triggering electronic unit (10) for controlling the unlocking element, which is connected to the central control unit (1) via a data line (7).

4. The unlocking element as claimed in any one of the foregoing claims, **characterised in that** the triggering device (4) has an evaluation unit for evaluating the status of the unlocking element and the control information of the central control unit (1).

5. The unlocking element as claimed in any one of the foregoing claims, **characterised in that** the triggering device (4) has an interface for communicating with the central control unit (1).

6. The unlocking element as claimed in any one of the foregoing claims, **characterised in that** the unlocking element is a displaceably mounted ratchet brace (8), which can be engaged detachably with the bonnet.

7. The unlocking element as claimed in Claim 6, **characterised in that** the ratchet brace (8) can be unlocked electrically, electromagnetically, pneumatically or hydraulically.

8. The unlocking element as claimed in Claim 6 or 7, **characterised in that** the sensor (13) monitors the position of the ratchet brace (8) for monitoring the status of the unlocking element.

9. The unlocking element as claimed in Claim 6 or 7, **characterised in that** the sensor (13) is a microswitch or reverberation sensor.

10. The unlocking element as claimed in any one of the foregoing claims, **characterised in that** the data line (7), which connects the triggering device (4) to the central control unit (1), is designed as a discrete, parallel or twisted data line or as part of a bus line.

## Revendications

1. Dispositif de déverrouillage pour un capot de moteur, supporté de façon mobile, d'un véhicule automobile, avec une unité de commande centrale et un dispositif de déclenchement qui lui est raccordé, qui présente un élément de déverrouillage commandé, ainsi qu'avec un équipement d'alimentation en énergie,
a) le dispositif de déclenchement (4) étant raccordé directement à l'équipement d'alimentation en énergie (5),
b) **caractérisé en ce que** le dispositif de déclenchement (4) présente un ou plusieurs capteurs (13) pour la surveillance de la position de l'élément de déverrouillage.

2. Dispositif de déverrouillage selon la revendication 1, **caractérisé en ce que** le dispositif de déclenchement (4) présente un équipement d'accumulation d'énergie (12).

3. Dispositif de déverrouillage selon la revendication 1 ou 2, **caractérisé en ce que** le dispositif de déclenchement (4) présente une unité électronique de déclenchement (10) pour la commande de l'élément de déverrouillage, qui est raccordée à l'unité de commande centrale (1) par le biais d'une ligne de données (7).

4. Dispositif de déverrouillage selon une des revendications précédentes, **caractérisé en ce que** le dispositif de déclenchement (4) présente une unité d'analyse pour analyser l'information de commande de l'unité de commande centrale (1).

5. Dispositif de déverrouillage selon une des revendications citées précédemment, **caractérisé en ce que** le dispositif de déclenchement (4) présente une interface de communication avec l'unité de commande centrale (1).

6. Dispositif de déverrouillage selon une des revendications précédentes, **caractérisé en ce que** l'élément de déverrouillage est un cran d'arrêt (8) supporté de façon mobile qui peut être amené en prise détachable avec le capot moteur.

7. Dispositif de déverrouillage selon la revendication 6, **caractérisé en ce que** le cran d'arrêt (8) est déverouillable de façon électrique, électromagnétique, pneumatique ou hydraulique.

8. Procédé selon la revendication 6 ou 7, **caractérisé en ce que** le capteur (13) pour la surveillance de l'état de l'élément de déverrouillage surveille la position du cran d'arrêt (8).

9. Dispositif de déverrouillage selon une des revendications précédentes, **caractérisé en ce que** le capteur (13) est un microrupteur ou un capteur à effet Hall.

10. Dispositif de déverrouillage selon une des revendications précédentes, **caractérisé en ce que** la ligne de données (7) qui connecte le dispositif de déclenchement (4) à l'unité de commande centrale (1) est réalisée en tant que ligne de données discrète, parallèle ou torsadée ou en tant que partie d'une ligne bus.
